# EUROPÄISCHE PATENTANMELDUNG

(11) **EP 1 225 115 A2**
(43) Veröffentlichungstag der Anmeldung: **24.07.2002**
(21) Anmeldenummer: 02000293.7
(22) Anmeldetag: 16.01.2002
(51) Int. Cl.: B62B 13/04

(54) **Einspuriger Schlitten**

(30) Priorität: 17.01.2001 DE 20100831 U
(71) Anmelder: Dorfner Grafik Design GmbH, art & presents, 90449 Nürnberg (DE)
(72) Erfinder: Mahlknecht, Stephan, 90547 Stein (DE)
(74) Vertreter: Gritschneder, Martin, Dipl.-Phys.

(57) **Zusammenfassung**

Der einspurige Schlitten (10) hat ein Trittbrett (12), eine vordere und eine hintere Kufe (26, 14), wobei die hintere Kufe (14) am hinteren Ende des Trittbretts (12) befestigt ist, und eine Lenksäule (22), die am vorderen Ende des Trittbretts (12) in einem Lenkungslager (20) mit etwa vertikaler Drehachse gelagert ist und am unteren Ende die vordere Kufe (26) und am oberen Ende einen Lenker (28) trägt. Die Kufen (26, 14) sind schmale, längliche Metallkufen einer Breite von einigen Millimetern bis Zentimetern und können lösbar am unteren Ende der Lenksäule (22) bzw. am hinteren Ende des Trittbretts (12) befestigt sein. Die Kufen können gegeneinander austauschbar Eiskufen (26, 14) und Schneekufen (80, 82) sein.

## Beschreibung

Die Erfindung betrifft einen einspurigen Schlitten mit einem Trittbrett und mit einer vorderen und hinteren Kufe, wobei die hintere Kufe am hinteren Ende des Trittbretts befestigt ist, sowie mit einer Lenksäule, die am vorderen Ende des Trittbretts in einem Lenkungslager mit etwa vertikaler Drehachse gelagert ist und am unteren Ende die vordere Kufe und am oberen Ende einen Lenker trägt.

Ein solcher einspuriger Schlitten ist ähnlich einem Tretroller gebaut, wobei lediglich die Laufräder durch Kufen ersetzt sind. Der einspurige Schlitten wird auch ähnlich einem Tretroller eingesetzt, wobei man mit einem Bein aufrecht auf dem Trittbrett steht, mit den Händen die Lenkerenden hält und sich mit dem anderen Bein am Boden oder der Fahrbahn abstößt.

Bekannt sind solche einspurigen Schlitten aus JP-9295582; US-A-5351975 und EP-A-0806227. Bei diesen bekannten einspurigen Schlitten werden sehr breite Kufen eingesetzt.

Bekannt sind ferner sogenannte Skibobs, bei denen noch ein Sitz vorgesehen ist und die für Bergabfahrten eingesetzt werden.

Aus DE-U 18 78 320 ist ein Kinderroller bekannt, bei dem die Laufräder gegen Eiskufen austauschbar sind.

Aus US-A 2,633,365 ist ein Roller bekannt, bei dem die Laufräder gegen Schneekufen ausgetauscht werden können. Am hinteren Ende des Trittbretts ist eine Bremse vorgesehen.

Der Erfindung liegt die Aufgabe zugrunde, einen einspurigen Schlitten zu schaffen, der auch auf Eisbahnen, zugefrorenen Seen und sonstigen vereisten Fahrbahnen einsetzbar ist.

Erfindungsgemäß wird diese Aufgabe dadurch gelöst, daß die Kufen, schmale, längliche Metallkufen einer Breite von einigen Millimetern bis Zentimetern sind.

Die Kufen des erfindungsgemäßen Schlittens sind ähnlich wie die Kufen von Schlittschuhen ausgebildet und ermöglichen ein ähnlich spurtreues Fahren.

Vorzugsweise sind die Kufen mit wenigen Handgriffen austauschbar, so daß sie gegen breite skiähnliche Kufen ausgetauscht werden können, die für Schnee geeignet sind.

Vorzugsweise ist ferner das Lenkungslager kippbar am vorderen Ende des Trittbretts angelenkt, so daß es mit der Lenksäule und dem Lenker parallel zum Trittbrett gelegt werden kann und dadurch zu einem handlichen Paket zusammengefaltet werden kann, das problemlos im Kofferraum eines Pkw untergebracht werden kann.

Vorzugsweise ist die Lenksäule teleskopisch zusammenschiebbar und in mehreren Stellungen einrastbar, wodurch einerseits die Höhe des Lenkers der Größe des Benutzers angepaßt werden kann und andererseits die Länge des zusammengefalteten Schlittens verkleinert werden kann.

Vorzugsweise ist am hinteren Ende des Trittbretts eine Bremse vorgesehen, die mit dem Fuß betätigbar ist. Die Bremse kann als Winkelhebel ausgebildet sein und kann dadurch betätigt werden, daß man mit dem Fußabsatz auf den nach oben stehenden Winkelschenkel drückt, so daß der andere, nach unten zeigende Winkelschenkel sich in den Schnee oder das Eis eingräbt und dadurch den Schlitten zum Stehen bringt.

Ein Ausführungsbeispiel der Erfindung wird nachfolgend anhand der Zeichnung erläutert. Es zeigen:
- Fig. 1: den erfindungsgemäßen Schlitten von der Seite;
- Fig. 2: den Schlitten von Fig. 1 von vorne;
- Fig. 3: den Schlitten von Fig. 1 von hinten;
- Fig. 4: die vordere Kufe von der Seite (demontiert);
- Fig. 5: die vordere Kufe von vorne;
- Fig. 6: die vordere Kufe von hinten (demontiert);
- Fig. 7: die hintere Kufe von vorne;
- Fig. 8: die hintere Kufe von der Seite;
- Fig. 9: die Bremse von der Seite;
- Fig. 10: die Bremse von hinten;
- Fig. 11: die vordere Schneekufe von der Seite;
- Fig. 12: die hintere Schneekufe von der Seite;
- Fig. 13: die hintere Schneekufe von vorne und
- Fig. 14: das um einen Schuh des Fahrers geschlungene Antriebsband.

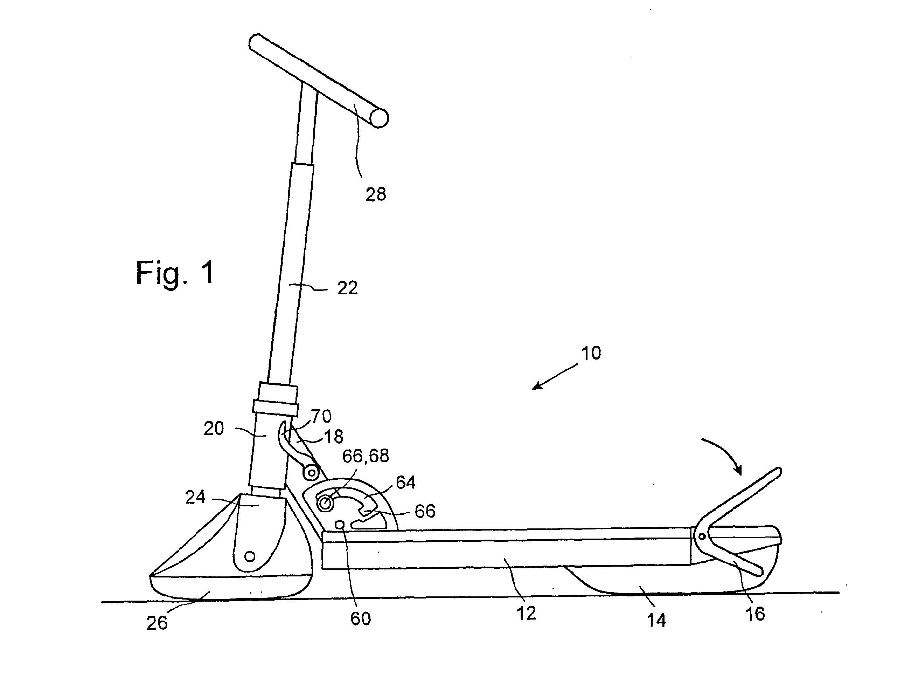

Der in den Fig. 1 bis 3 dargestellte Schlitten 10 hat ein Trittbrett 12, an dessem hinteren Ende eine hintere Kufe 14 und eine Bremse 16 angeordnet sind. Am vorderen Ende des Trittbretts 10 ist mittels einer schräg nach vorne zeigenden Lagerstütze 18 ein Lenkungslager 20 angeordnet, das eine aus der Vertikalen leicht nach hinten geneigte Drehachse hat und in dem eine Lenksäule 22 drehbar gelagert ist. An dem aus dem Lenkungslager 20 nach unten vorstehenden Ende der Lenksäule 22 ist in einer Gabel 24 eine vordere Kufe 26 befestigt. Am oberen Ende der Lenksäule 22 ist ein horizontaler Lenker 28 vorgesehen.

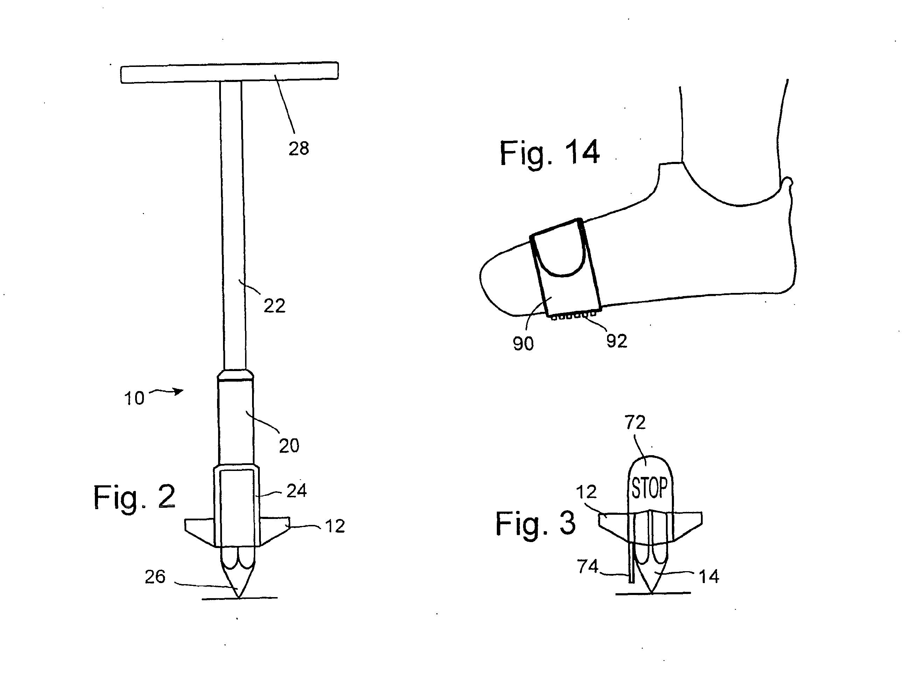

Wie in den Fig. 2 und 3 erkennbar, haben die Kufen 14, 26 eine Breite von einigen Millimetern oder Zentimetern, so daß der Schlitten 10 ähnlich wie Schlittschuhe auf eisiger Unterlage spurtreu und mit wenig Reibungswiderstand fährt oder gleitet. Die Kufen 14, 26 bestehen aus Metall.

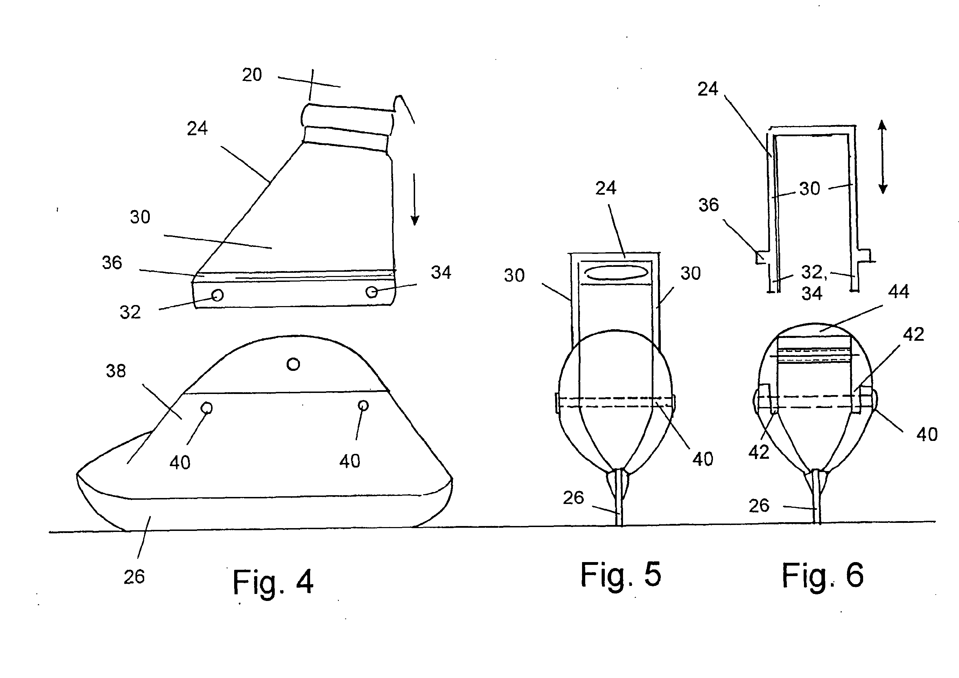

Fig. 4 bis 6 zeigen im Detail die Befestigung der vorderen Kufe 26 in der Gabel 24 am unteren Ende der Lenksäule 22, wobei die Fig. 4 und 6 den demontierten Zustand und Fig. 5 den montierten Zustand zeigen. Die Gabel 24 hat zwei etwa trapezförmige, vertikale Schenkel 30 mit jeweils fluchtenden vorderen Bohrungen 32 und hinteren Bohrungen 34 sowie einem nach außen abstehenden, horizontalen Stützflansch 36. Die vordere Kufe 26 ist in einem vorderen Kufenträger 38 gehalten, dessen Oberseite so ausgebildet ist, daß er formschlüssig an der Gabel 24 gehalten wird und durch zwei Gewindebolzen 40 in den Bohrungen 32, 34 befestigt werden kann. Der Kufenträger 38 weist dazu Längsnuten 42 auf, in die die unteren Enden der Schenkel 30 einschließlich der Bohrungen 32, 34 eintauchen sowie in der Mitte einen blockförmigen Aufsatz 44, der genau zwischen die beiden Schenkel 30 paßt. Die Stützflansche 36 liegen auf dem Kufenträger 38 auf.

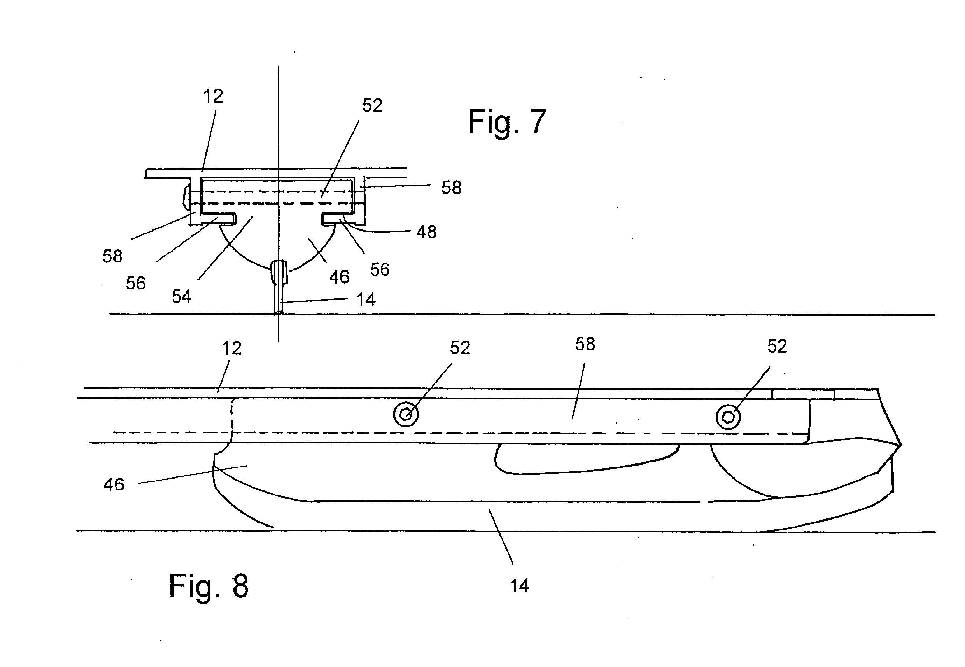

Das Trittbrett 12 ist ein flaches Kastenprofil (Fig. 7) mit einer verbreiterten Oberseite. In der Unterseite des Kastenprofils ist eine vom hinteren Ende des Trittbretts 12 ausgehende Öffnung oder ein Einschnitt 54 ausgespart. Die Breite der Öffnung 54 entspricht etwa der halben Breite des Kastenprofils, so daß zu beiden Seiten der Öffnung 54 waagrechte Schienenelemente 56 stehen bleiben. In Längsrichtung erstreckt sich die Öffnung 54 bis etwa 30 cm vom hinteren Ende des Trittbretts 12.

Die hintere Kufe 14 ist in ähnlicher Weise wie die vordere Kufe 26 mittels eines Kufenträgers 46 am Trittbrett 12 befestigt. Der Kufenträger 46 hat seitlich zwei Längsnuten 48, mittels der der Kufenträger 46 auf die Schienenelemente 56 aufgeschoben werden kann. Mittels Gewindebolzen 52, die durch fluchtende, horizontale Bohrungen in den Seitenwänden 58 des Kastenprofils in die Kufenträger 46 geschraubt werden, ist er an dem Trittbrett 12 befestigt.

Die Lagerstütze 18 ist mittels eines Kippgelenks 60 am vorderen Ende des Trittbretts 12 angelenkt, wobei eine Arretierung in beiden Positionen vorgesehen ist, in denen die Lenksäule 22 unter einem Winkel von einigen Grad aus der Vertikalen nach hinten geneigt ist, sowie in der zusammengefalteten Position, in der die Lenksäule 22 auf dem Trittbrett liegt. Am vorderen Ende des Trittbretts 12 ist dazu auf beiden Seiten oder auf einer Seite neben dem Kippgelenk 60 eine Kulisse 62 angeordnet, in der bei der Ausführungsform der Fig. 1 eine längliche Öffnung 64 ausgeschnitten ist, die einen Viertelkreisbogen um die Achse des Kippgelenks 60 bildet. Am Ende der Öffnung 64 sind jeweils radial nach innen zeigende Ausbuchtungen 66 vorhanden. In der Öffnung 64 wird ein Bolzen 68 geführt, der sich quer durch die Lagerstütze 18 erstreckt und dort in einem Langloch geführt ist, so daß er am Ende der Öffnung 64 jeweils in die Ausbuchtungen 66 fallen kann. Mittels einer im Inneren der Lagerstütze 18 vorgesehenen Feder wird der Bolzen 68 zur Drehachse hin vorgespannt. Mittels eines Hebels 70 kann er über ein im Inneren der Lagerstütze 18 vorgesehenes Gestänge aus den Ausbuchtungen 66 angehoben werden, so daß die Lenksäule 22 aufgestellt oder auf das Trittbrett 12 gefaltet werden kann.

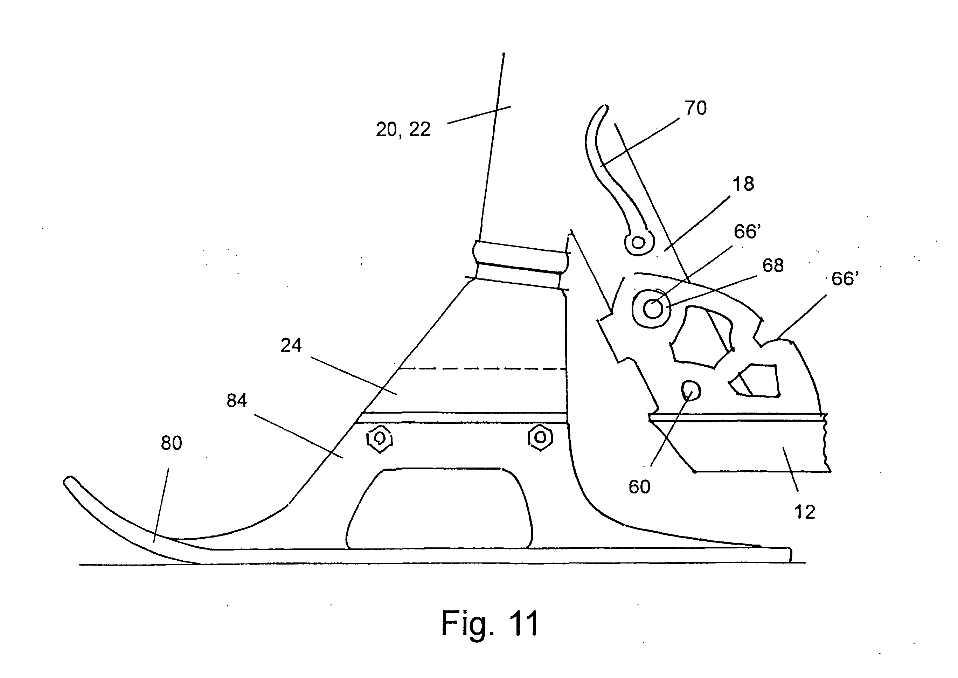

Wie in Fig. 11 gezeigt, kann der Bolzen 68 auch in Einschnitte 66' auf dem Umfang der Kulisse 62 einrasten. Auch bei dieser Ausführungsform wird der Bolzen 68 mittels des Hebels 70 angehoben und dadurch die Arretierung der Lagerstütze 18 gelöst.

Die Lenksäule 22 ist teleskopisch herausziehbar und in mehreren Positionen einrastbar, wozu fluchtende Bohrungen in den teleskopisch zusammenschiebbaren Teilen der Lenksäule 22 vorgesehen sein können, durch die ein Splint gesteckt wird. Es ist auch möglich, im Inneren der Lenksäule 22 einen gefederten Zapfen vorzusehen, der in die fluchtenden Bohrungen einrastet.

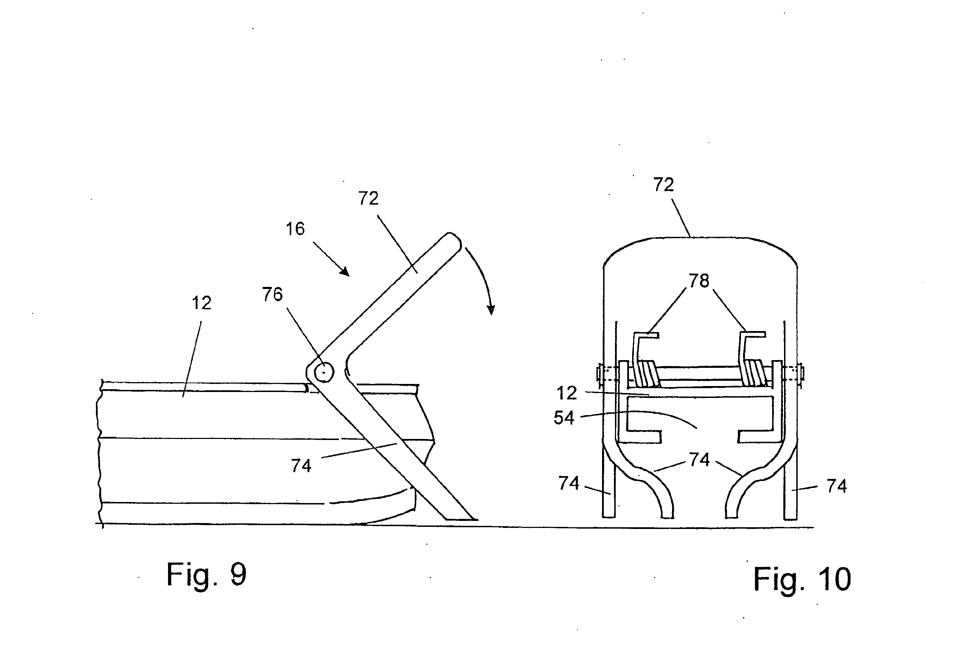

Am hinteren Ende des Trittbretts 12 ist gemäß Fig. 9 und 10 die Bremse 16 vorgesehen. Von der Seite betrachtet (Fig. 9) ist die Bremse 16 ein Winkelhebel mit einem oberen und einem unteren Winkelschenkel 72, 74, die einen Winkel von etwa 60 Grad einschließen und zusammen um eine Drehachse 76 schwenkbar sind, in der sich die beiden Winkelschenkel 72, 74 treffen. Der obere Winkelschenkel 72 ist als etwa halbkreisförmige Platte ausgebildet, während der untere Winkelschenkel 74 lediglich zwei Bremshebel beinhaltet, die links und rechts vom Trittbrett 12 am Ende der Drehachse 76 angeordnet sind. Durch Schenkelfedern 78 wird die Trittplatte 72 normalerweise nach oben gedrückt. Mittels des Fußabsatzes kann der Fahrer oder Benutzer die Platte 72 herunterdrücken, so daß sich die Hebel 74 in den Untergrund drücken und den Schlitten zum Stehen bringen.

In Fig. 10 sind zwei Varianten der Hebel 74 eingezeichnet. Die Hebel 74 können entweder geradlinig verlaufen, so daß sie sich insgesamt rechtwinklig zur Drehachse 76 erstrecken. Sie können jedoch auch nach innen gekröpft sein, so daß sie näher bei der hinteren Kufe 14 den Untergrund berühren. Bei der zuletzt genannten Variante wird die Fahrrichtung des Schlittens 10 weniger beeinflußt, wenn bei unebenem Untergrund nur einer der beiden Hebel 74 bei einem Bremsvorgang den Boden berührt.

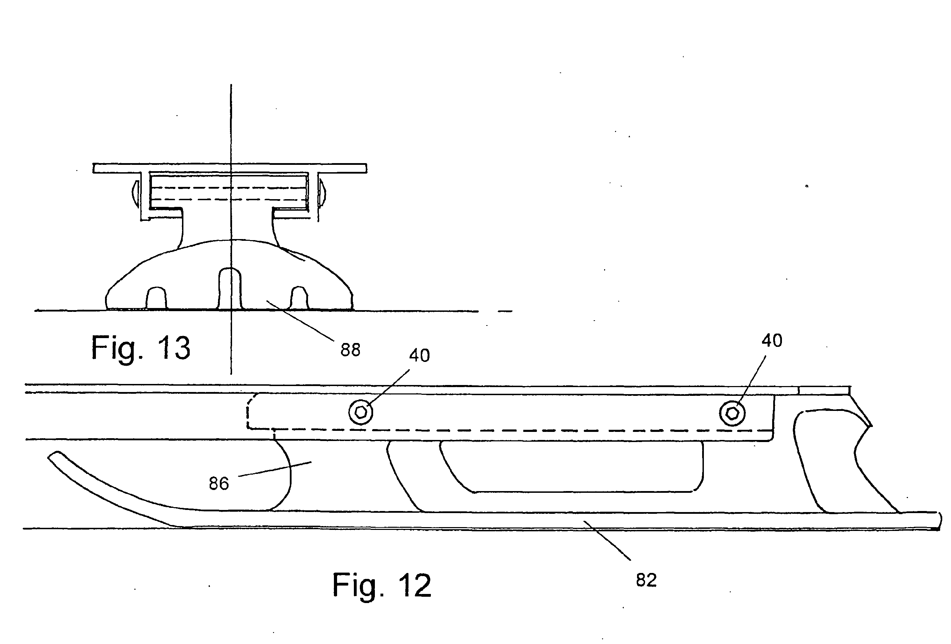

Durch Lösen und Herausziehen der Gewindebolzen 40, 42 können die vordere und die hintere Kufe 26, 14 mit wenigen Handgriffen abgenommen werden. Es können statt dessen Schneekufen 80, 82 montiert werden (Fig. 11 bis 13). Die Schneekufen 80, 82 haben Kufenträger 84, 86, die ähnlich den Kufenträgern 38, 46 der für Eis vorgesehenen Kufen 26, 14 ausgebildet sind, so daß sie an der Gabel 24 bzw. in der Öffnung 54 mittels der Gewindebolzen 40, 52 montiert werden können. Die Schneekufen 80, 82 haben eine wesentlich breitere Auflagefläche 88, so daß der Schlitten 10 mittels dieser Kufen 80, 82 auch auf Schnee eingesetzt werden kann. Bei gekröpften Bremshebeln 74 wird die hintere Schneekufe 82 so tailliert, daß die Bremshebel 74 nicht gegen die Schneekufe 82 stoßen.

Der Benutzer oder Fahrer des Schlittens steht mit einem Fuß auf dem Trittbrett 12, hält mit beiden Händen den Lenker 28 und stößt sich mit dem anderen Fuß am Untergrund ab. Um diesen Fuß ist ein Antriebsband 90 geschlungen (Fig. 14), das auf der Unterseite des Fußes kurze Spikes 92 oder eine Aufrankung aufweist. Die beiden Enden des Antriebsbands 90 sind mit einem Klettverschluß auf der Oberseite des Fußes verbunden.

### Liste der Bezugszeichen

- 10: Schlitten
- 12: Trittbrett
- 14: hintere Kufen
- 16: Bremsen
- 18: Lagerstütze
- 20: Lenkungslager
- 22: Lenksäule
- 24: Gabel
- 26: vordere Kufen
- 28: Lenker
- 30: Schenkel
- 32: vordere Bohrung
- 34: hintere Bohrung
- 36: Stützflansch
- 38: Kufenträger
- 40: Gewindebolzen
- 42: Nuten
- 44: Aufsatz
- 46: Kufenträger
- 48: Längsnuten
- 50: Flansch
- 52: Gewindebolzen
- 54: Öffnung/Einschnitt
- 56: Schienenelemente
- 58: Seitenwände
- 60: Kippgelenk
- 62: Kulisse
- 64: Öffnung
- 66: Ausbuchtung
- 66': Einschnitte
- 68: Bolzen
- 70: Hebel
- 72: oberer Winkelschenkel
- 74: unterer Winkelschenkel
- 76: Drehachse
- 78: Schenkelfedern
- 80: Schneekufen
- 82: Schneekufen
- 84: Kufenträger
- 86: Kufenträger
- 88: Auflagefläche
- 90: Antriebsband
- 92: Spikes

## Patentansprüche

1. Einspuriger Schlitten (10) mit einem Trittbrett (12), mit einer vorderen und einer hinteren Kufe (26, 14), wobei die hintere Kufe (14) am hinteren Ende des Trittbretts (12) befestigt ist, und mit einer Lenksäule (22), die am vorderen Ende des Trittbretts (12) in einem Lenkungslager (20) mit etwa vertikaler Drehachse gelagert ist und am unteren Ende die vordere Kufe (26) und am oberen Ende einen Lenker (28) trägt, **dadurch gekennzeichnet, daß** die Kufen (26, 14) schmale, längliche Metallkufen einer Breite von einigen Millimetern bis Zentimetern sind.

2. Schlitten nach Anspruch 1, **dadurch gekennzeichnet, daß** die Kufen (26, 14) lösbar am unteren Ende der Lenksäule (22) bzw. am hinteren Ende des Trittbretts (12) befestigt sind.

3. Schlitten nach Anspruch 2, **dadurch gekennzeichnet, daß** gegeneinander austauschbar Eiskufen (26, 14) und Schneekufen (80, 82) am unteren Ende der Lenksäule (22) bzw. am hinteren Ende des Trittbretts (12) befestigbar sind.

4. Schlitten nach einem der Ansprüche 1 bis 3, **dadurch gekennzeichnet, daß** das Lenkungslager (20) kippbar am vorderen Ende des Trittbretts (12) angelenkt ist, so daß der Schlitten (10) zusammenfaltbar ist.

5. Schlitten nach einem der Ansprüche 1 bis 4, **dadurch gekennzeichnet, daß** die Lenksäule (22) teleskopisch zusammenschiebbar und in mehreren Stellungen einrastbar ist.

6. Schlitten nach einem der Ansprüche 1 bis 5, **dadurch gekennzeichnet, daß** am hinteren Ende des Trittbretts (12) eine Bremse (16) vorgesehen ist, die mit dem Fuß betätigbar ist, wobei durch Betätigen der Bremse ein Hebel (74) nach unten in die Fahrbahn schwenkbar ist.
